Europäisches Patentamt

(19) **European Patent Office**

**Office européen des brevets**

(11) Publication number: **0 023 377**
**B1**

(12) **EUROPEAN PATENT SPECIFICATION**

(45) Date of publication of patent specification: **04.05.83**

(51) Int. Cl.³: **A 01 K 11/00**

(21) Application number: **80200713.8**

(22) Date of filing: **18.07.80**

(54) Strap for marking cattle.

(30) Priority: **26.07.79 NL 7905791**

(43) Date of publication of application:
**04.02.81 Bulletin 81/5**

(45) Publication of the grant of the patent:
**04.05.83 Bulletin 83/18**

(84) Designated Contracting States:
**AT BE CH DE FR GB IT LI LU NL SE**

(56) References cited:
**FR - A - 2 093 407**
**FR - A - 2 211 180**
**GB - A - 1 137 067**
**US - A - 2 497 632**
**US - A - 3 782 017**
**US - A - 4 019 463**

(73) Proprietor: **Lörincz, Istvan**
**Zutphenseweg 39**
**NL-7241 KP Lochem (NL)**

(72) Inventor: **Lörincz, Istvan**
**Zutphenseweg 39**
**NL-7241 KP Lochem (NL)**

(74) Representative: **van der Beek, George Frans et al,**
**Nederlandsch Octrooibureau Johan de Wittlaan**
**15 P.O. Box 29720**
**NL-2502 LS Den Haag (NL)**

Courier Press, Leamington Spa, England.

Strap for marking cattle

The invention relates to a strap for marking cattle, provided with a buckle and one or more flat bodies fitting snugly on the strap and on the or their outer surface(s) provided with one or more figures, characters or other symbols.

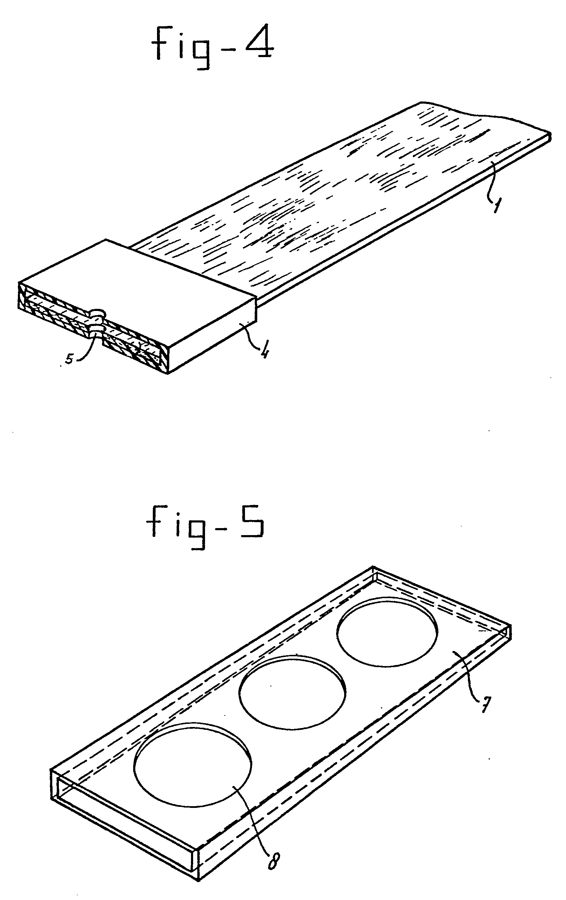

Such a strap is known from US—A—3 782 017. This known strap is meant for attaching identifying tags to pets such as dogs and cats. The flat body is formed of a soft aluminium sheet, which sheet is provided with protrusions. These protrusions are simply bent around the strip, see fig. 5. This structure is not reliable enough for marking cattle such as cows. The body comprising the identifying figures, characters or other symbols can easily be lost from the strap.

The invention aims to provide an improved strap, which is characterized in that the or each flat body consists of plastic or rubber over its whole length and is provided with a continuous in cross-section rectangular passage corresponding to the cross-sectional form of the strap, which passage has a continuously decreasing height from one end to the other of the body.

Since according to the invention the flat body carrying the figures, characters or symbols is made of plastic or rubber, the body is very resistant to abrasion and corrosion. Since the rectangular passage is continuous the body cannot be removed from the strap without opening the buckle. By decreasing continuously the height of said passage from one end to the other the body is clamped well on the strip.

It is remarked that from FR—A—2 093 407 a strap for marking cattle is known, whereby a strip with symbols is placed within the tubular strap made of transparent plastic.

The buckle forms one part with the strap and is also hollow. The in cross-section rectangular passage in the buckle corresponds to the cross-sectional form of the strap, since the end portion of the strap is adapted to be received within the buckle. However, this relates to the buckle and not to the mark itself.

Preferably the end portion of the strap according to the present invention which is not provided with the buckle contains openings, said end portion on one side having been coated with a layer of resin which during its application has impregnated at least partly the material of the strap. In this way the openings in the strap, preferably made of textile or plastic fabric, can be made by punching, without danger of rupture of the strap. Special eyelets or the like are not necessary.

Preferably according to the invention the figures, characters or other symbols are cast into the body itself. In this way they will remain always visible, even if abrasion of the body takes place.

Preferably according to the invention the body on the visible side is provided with upstanding edges. These edges prevent abrasion of the characters.

The invention will now be explained with reference to the drawings, in which:

Fig. 1 is a perspective view of the closed strap with a long mark and a short mark;

Fig. 2 is an inner view of the strap end containing openings;

Fig. 3 shows a detail of fig. 1, seen from the inner side;

Fig. 4 shows a detail of the buckle end of the strap, seen from the inner side and with a part of the buckle;

Fig. 5 is a view of a long mark, seen from the inner side of the strap;

Fig. 6 is an upper view of a long mark, in a somewhat alternative form; and

Fig. 7 is a section over the line VII—VII of fig. 6.

The strap 1 consists preferably of textile or plastic fabric. At the free end of the strap a number of openings 2 are provided, see fig. 2, which openings 2 are provided in strap material impregnated with resin or the like. For this the end of the strap 1 is arranged in a hollow die, into which for instance liquid resin is supplied. This resin impregnates the strap material and forms a resin layer 3 at the inner side, see fig. 2.

In this end the openings 2 can be made by punching in an easier way, without special eyelets for avoiding tearing.

The shown plastic buckle 4 has in view a rectangular form and is provided with a continuous rectangular passage. This buckle 4 is connected to the strap end by casting or vulcanizing. This means that the inner side of one wall of the buckle 4 forms one part with the strap end.

In the buckle 4 a central opening 5 is present, passing through both walls of the buckle and of course also through the strap 1.

Through this opening 5 and through one of the openings 2 a plastic or metal pin can be passed with a head 6a and a thickened end 6b. When the pin is being positioned the thickened end 6b is passed through the openings 5 and 2, until the end 6b extends beyond the buckle 4, see fig. 3. By applying a pulling force to the head 6a, the pin can be removed again. Of course, other ways of locking are possible.

The long mark 7 has also a rectangular form and a rectangular continuous passage and consists as well of plastic or rubber.

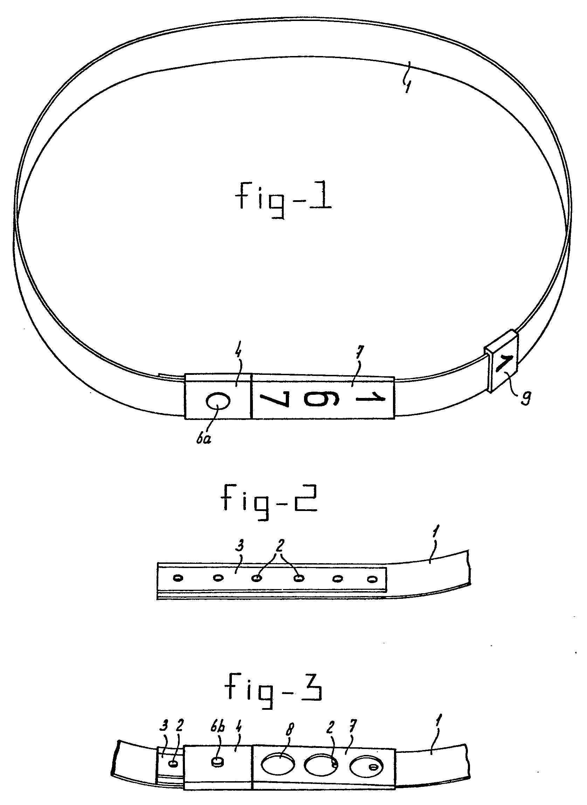

In fig. 1 and 3 the mark 7 is arranged directly against the buckle 4. This mark 7, however, can be present at any other place along the strap 1.

The mark 7 fits snugly on the strap 1 and is provided with holes 8 to save material.

By decreasing the height of the internal rectangular cross-section from one end to the other, the long mark 7 is clamped well on the strap 1. Such a long mark has for instance three figures, which form together the number 167.

It is also possible to use three short marks of which one in fig. 1 is indicated with reference number 9 and which has for instance only the figure 1.

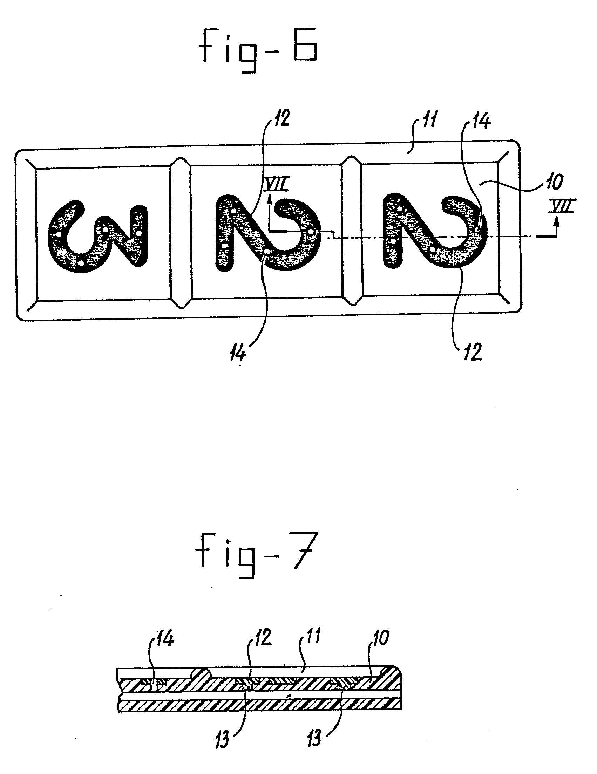

The mark 10 according to fig. 6 and 7 has as well as the mark 7 a rectangular oblong form with a rectangular continuous passage and consists also of plastic or rubber.

The mark 10 is at the visible side provided with an upstanding edge 11 around the figures or characters 12. This edge 11 serves to prevent wear of the figures or characters 12.

Further these figures or characters 12 are cast in the material of the mark 10. For this, the characters 12 are first cast in plastic. At the same time pins 13 or the like are formed on the characters 12. In the characters 12 holes 14 are present, with which they can be fastened to pins of the die, in which the mark 10 is cast. The material of the mark 10 hardens around the characters 12, see fig. 7. In this way the characters 12 will remain always visible.

## Claims

1. Strap for marking cattle, provided with a buckle (4) and one or more flat bodies (7, 10) fitting snugly on the strap (1) and on the or their outer surface(s) provided with one or more figures, characters or other symbols (12), characterized in that the or each flat body (7) consists of plastic or rubber over its whole length and is provided with a continuous in cross-section rectangular passage corresponding to the cross-sectional form of the strap (1), which passage has a continuously decreasing height from one end to the other of the body (7, 10).

2. Strap according to claim 1, in which the end portion thereof which is not provided with the buckle (4) contains openings (2), characterized in that said end portion on one side is coated with a layer of resin which during its application has impregnated at least partly the material of the strap (1).

3. Strap according to claim 1 or 2, characterized in that the figures, characters or other symbols (12) are cast into the body (10) itself.

4. Strap according to claim 1, 2 or 3, characterized in that the body (10) on the visible side is provided with upstanding edges (11).

## Patentansprüche

1. Gurt zur Kennzeichnung von Vieh, mit einer Schließe (4) und einem oder mehreren flachen Körpern (7, 10), die eng auf den Gurt passen und an ihrer Außenfläche oder ihren Außenflächen mit einer oder mehreren Zahlen, Buchstaben oder anderen Symbolen (12) versehen sind, dadurch gekennzeichnet, daß der oder jeder flache Körper (7) über seine ganze Länge aus Kunststoff oder Gummi besteht und mit einem durchgehenden, im Querschnitt rechteckigen Kanal entsprechend der Querschnittsform des Gurtes (1) versehen ist, wobei der Kanal eine von einem zum anderen Ende des Körpers (7, 10) kontinuierlich abnehmende Höhe hat.

2. Gurt nach Anspruch 1, dessen nicht mit der Schließe (4) versehener Endbereich Öffnungen (2) aufweist, dadurch gekennzeichnet, daß dieser Endbereich auf einer Seite mit einer Harzschicht versehen ist, die bei ihrer Aufbringung das Material des Gurtes (1) mindestens teilweise imprägniert hat.

3. Gurt nach Anspruch 1 oder 2, dadurch gekennzeichnet, daß die Zahlen, Buchstaben oder anderen Symbole (12) in den Körper (10) selbst eingeformt sind.

4. Gurt nach Anspruch 1, 2 oder 3, dadurch gekennzeichnet, daß der Körper (10) auf seiner sichtbaren Seite mit erhöhten Kanten (11) versehen ist.

## Revendications

1. Collier pour marquage de bétail, pourvu d'une boucle (4) et d'un ou plusieurs corps plats (7, 10) montés sans jeu sur le collier (1) et munis sur la ou leurs surface(s) extérieure(s) d'un ou plusieurs chiffres, caractères ou autres symboles (12), caractérisé en ce que le ou chaque corps plat (7) est formé de matière plastique ou de caoutchouc sur la totalité de sa longueur et est pourvu d'un passage continu de section droite rectangulaire correspondant à la forme de section droite du collier (1), ce passage ayant une hauteur qui diminue de façon continue d'une extrémité à l'autre du corps (7, 10).

2. Collier suivant la revendication 1, dans lequel la partie terminale dudit collier qui n'est pas pourvue de la boucle (4) comporte des ouvertures (2), caractérisé en ce que ladite partie terminale, sur un de ses côtés, est revêtue par une couche de résine qui, pendant son application, à imprégné au moins partiellement la matière du collier (1).

3. Collier suivant les revendications 1 ou 2, caractérisé en ce que les chiffres, caractères ou autres symboles (12) sont moulés dans le corps (10) lui-même.

4. Collier suivant les revendications 1, 2 ou 3, caractérisé en ce que le corps (10) est pourvu sur son côté visible de bords saillants (11).

fig-1

fig-2

fig-3

# fig-4

# fig-5

# fig-6

# fig-7